# EUROPEAN PATENT APPLICATION

(11) **EP 4 239 254 A1**
(43) Date of publication of application: **06.09.2023**
(21) Application number: 20959098.3
(22) Date of filing: 29.10.2020
(51) Int. Cl.: F24F 11/00, B60H 1/00, B60H 3/00

(54) **MULTI-LOOP HEAT-PUMP AIR CONDITIONING SYSTEM SUPPORTING LOW-TEMPERATURE START OF AUTOMOBILE, AND AUTOMOBILE**

(71) Applicant: Zhejiang Geely Holding Group Co., Ltd., Hangzhou, Zhejiang 310051 (CN); Ningbo Geely Automobile Research & Development Co. Ltd., Hangzhou Bay New District Ningbo 315336 (CN)
(72) Inventor: ZHANG, Yuanyuan, Hangzhou Bay New District Ningbo, Zhejiang 315336 (CN); LU, Shuqiang, Hangzhou Bay New District Ningbo, Zhejiang 315336 (CN); LIU, Dayun, Hangzhou Bay New District Ningbo, Zhejiang 315336 (CN)
(74) Representative: Dai, Simin
(86) International application number: PCT/CN2020/124605
(87) International publication number: WO 2022/087935

(57) **Abstract**

The present invention discloses a multi-circuit heat pump air-conditioning system supporting start of a vehicle at a low temperature, which includes a coolant system, a heat pump system and an electronic control system. The coolant system includes a coolant circuit; the heat pump system comprises a refrigerant circuit including a gas-liquid separator, a compressor, a battery heat exchanger, a liquid cooling condenser, a coolant heater, a refrigerant pipeline, and hydraulic valves arranged in the refrigerant pipeline. The coolant heater is configured to heat a coolant when an ambient temperature is lower than a preset temperature and the heat pump system is in a non-working state. The compressor is configured to work to heat refrigerant in the refrigerant pipeline after the heat pump system is started. The electronic control system includes a communication unit, a processor and a switching module. The coolant circuit is thermally connected with the refrigerant circuit. The present invention solves the problem that it is difficult to start the heat pump system at the low temperature without adding additional refrigerant state change device.

## Description

The present invention relates to the field of vehicle heat management technology, and in particular, to a multi-circuit heat pump air-conditioning system supporting start of a vehicle at a low temperature and a vehicle.

### BACKGROUND

With increasing sales of new energy vehicles, vehicle heat management has become a rapidly growing sub-industry in vehicle industry and one of key fields to be broken through. At present, an air-conditioning system with a heat pump is employed in many electric vehicles to meet the requirement of supplying heat in vehicles in winter. However, for a heat pump system, components of the heat pump are added on the basis of the air-conditioning system, resulting in a significant increase in system complexity and coupling. At the same time, heat exchanger of the heat pump system outside a vehicle is prone to frosting, and its heating effect is poor in winter. Therefore, such manner, in combination with auxiliary heating manners, has a greater impact on the drivable mileage of the vehicle, and battery life is also reduced.

In the prior art, in an air-conditioning system with a heat pump of a vehicle having a function of starting at a low temperature, a refrigerant state is changed by designing a refrigerant state change device to enable an electric compressor to operate normally at the low temperature, realizing start of a heat pump system at the low temperature. However, system complexity and cost are increased with the addition of the refrigerant state change device, and reliability and maintainability of the system become worse. At the same time, existing heating modes of the air-conditioning system with a heat pump of the vehicle are not diverse enough to flexibly and fully utilize heat sources inside and outside the vehicle, so that an energy utilization rate of entire system is low. Under extreme conditions, for example, at -30 °C, refrigerant, which is liquid, makes a heating effect of the compressor poor at the low temperature. Therefore, it is necessary to improve the prior art to solve the above problems.

### SUMMARY

The present invention is intended to solve at least one of technical problems existing in the prior art. For this reason, in a first aspect of the present invention, a multi-circuit heat pump air-conditioning system supporting start of a vehicle at a low temperature is provided that includes a coolant system, a heat pump system and an electronic control system.

The coolant system includes a coolant circuit including a DC/DC, a motor, a battery pack, a coolant pipeline, and hydraulic valves and at least one water pump arranged in the coolant pipeline.

The heat pump system includes a refrigerant circuit including a gas-liquid separator, a compressor, a battery heat exchanger, a liquid cooling condenser, a coolant heater, a refrigerant pipeline, and hydraulic valves arranged in the refrigerant pipeline. The coolant heater is configured to heat a coolant when an ambient temperature is lower than a preset temperature and the heat pump system is in a non-working state, and the compressor is configured to work to heat refrigerant in the refrigerant pipeline after the heat pump system is started.

The electronic control system includes a communication unit, a processor and a switching module. The communication unit is configured to receive an ambient temperature outside the vehicle, temperature control requirements of a passenger compartment and the battery pack, and a heat storage state of the battery pack, the processor is configured to generate a working mode switching instruction according to the ambient temperature outside the vehicle, the temperature control requirements of the passenger compartment and the battery pack, and the heat storage state of the battery pack, and the switching module is configured to switch connection states of the coolant circuit and/or the refrigerant circuit in response to the working mode switching instruction.

The communication unit is electrically connected with the processor, the processor is electrically connected with the switching module, and the coolant circuit is thermally connected with the refrigerant circuit.

Further, the heat pump system includes an HVAC assembly and a battery electronic expansion valve. The HVAC assembly includes an internal condenser, an air blower, an air door and an air duct, and the electronic control system further includes an air-conditioning controller.

The HVAC assembly is electrically connected with the air-conditioning controller, and the air-conditioning controller is electrically connected with the processor.

An end of the liquid cooling condenser is connected with the end of a motor through a hydraulic valve, another end of the liquid cooling condenser is connected with an end of the battery heat exchanger through a hydraulic valve, another end of the battery heat exchanger is connected with an end of the battery pack through a hydraulic valve, and another end of the battery pack is connected with another end of the motor through a hydraulic valve;

An end of the internal condenser is connected with an end of the battery electronic expansion valve, another end of the battery electronic expansion valve is connected with an end of the battery heat exchanger, another end of the battery heat exchanger is connected with an end of the gas-liquid separator, another end of the gas-liquid separator is connected with an end of the compressor, and another end of the compressor is connected with another end of the internal condenser.

Further, the HVAC assembly includes an internal radiator.

The another end of the liquid cooling condenser is connected with an end of the internal radiator, and another end of the internal radiator is connected with an end of a motor.

Further, an end of the liquid cooling condenser is connected with an end of the coolant heater, another end of the coolant heater is connected with an end of the internal radiator, and another end of the internal radiator is connected with an end of a motor.

Further, the HVAC assembly includes an internal evaporator and an evaporator electronic expansion valve.

The end of the internal condenser is connected with an end of the evaporator electronic expansion valve, another end of the evaporator electronic expansion valve is connected with an end of the internal evaporator, and another end of the internal evaporator is connected with the end of the gas-liquid separator.

Further, the HVAC assembly includes an internal evaporator and an evaporator electronic expansion valve.

The another end of the liquid cooling condenser is connected with an end of the coolant heater, and another end of the coolant heater is connected with an end of the battery pack.

The another end of the internal condenser is connected with an end of the evaporator electronic expansion valve, another end of the evaporator electronic expansion valve is connected with an end of the internal evaporator, and another end of the internal evaporator is connected with the end of the gas-liquid separator.

Further, the another end of the gas-liquid separator is connected with an end of the liquid cooling condenser, another end of the liquid cooling condenser is connected with an end of the battery electronic expansion valve, and another end of the battery electronic expansion valve is connected with the battery heat exchanger.

Further, the heat pump system includes a radiator.

The another end of the liquid cooling condenser is connected with an end of the radiator, and another end of the radiator is connected with the end of the battery heat exchanger through a hydraulic valve.

The end of the liquid cooling condenser is connected with the another end of the gas-liquid separator, the another end of the liquid cooling condenser is connected with the end of the battery electronic expansion valve, and the another end of the battery electronic expansion valve is connected with the battery heat exchanger.

Further, the heat pump system includes an HVAC assembly, wherein the HVAC assembly includes an internal evaporator and an evaporator electronic expansion valve; the electronic control system further includes an air-conditioning controller.

The HVAC assembly is electrically connected with the air-conditioning controller, and the air-conditioning controller is electrically connected with the processor.

An end of the liquid cooling condenser is connected with an end of the motor through a hydraulic valve, another end of the liquid cooling condenser is connected with an end of the battery heat exchanger through a hydraulic valve, another end of the battery heat exchanger is connected with an end of the battery pack through a hydraulic valve, and another end of the battery pack is connected with another end of the motor through a hydraulic valve.

The another end of the liquid cooling condenser is connected with an end of the evaporator electronic expansion valve, another end of the evaporator electronic expansion valve is connected with an end of the internal evaporator, another end of the internal evaporator is connected with an end of the gas-liquid separator, another end of the gas-liquid separator is connected with an end of the compressor, and another end of the compressor is connected with the end of the liquid cooling condenser.

Further, the heat pump system includes a radiator.

The another end of the liquid cooling condenser is connected with an end of the radiator, and another end of the radiator is connected with an end of the battery heat exchanger through a hydraulic valve.

Further, the another end of the liquid cooling condenser is connected with an end of the battery heat exchanger, and the end of the battery heat exchanger is connected with the end of the gas-liquid separator.

Further, the heat pump system includes a battery electronic expansion valve.

An end of the liquid cooling condenser is connected with an end of the motor through a hydraulic valve, another end of the liquid cooling condenser is connected with an end of the battery heat exchanger through a hydraulic valve, another end of the battery heat exchanger is connected with an end of the battery pack through a hydraulic valve, and another end of the battery pack is connected with another end of the motor through a hydraulic valve.

The another end of the liquid cooling condenser is connected with an end of the coolant heater, and another end of the coolant heater is connected with an end of the battery pack.

The another end of the liquid cooling condenser is connected with an end of the battery electronic expansion valve, another end of the battery electronic expansion valve is connected with the another end of the battery heat exchanger, the end of the battery heat exchanger is connected with an end of the gas-liquid separator, another end of the gas-liquid separator is connected with an end of the compressor, and another end of the compressor is connected with the end of the liquid cooling condenser.

Further, the heat pump system includes a radiator, an HVAC assembly and a battery electronic expansion valve, wherein the HVAC assembly includes an internal condenser.

An end of the battery pack is connected with an end of the motor through a hydraulic valve, and another end of the battery pack is connected with another end of the motor through a hydraulic valve.

Another end of the battery heat exchanger is connected with an end of the liquid cooling condenser through a hydraulic valve, another end of the liquid cooling condenser is connected with an end of the radiator, and another end of the radiator is connected with an end of the battery heat exchanger through a hydraulic valve.

an end of the internal condenser is connected with an end of the battery electronic expansion valve, another end of the battery electronic expansion valve is connected with the another end of the battery heat exchanger, the end of the battery heat exchanger is connected with an end of the gas-liquid separator, another end of the gas-liquid separator is connected with an end of the compressor, and another end of the compressor is connected with another end of the internal condenser.

In a second aspect of the present invention, a vehicle is provided. The vehicle includes a multi-circuit heat pump air-conditioning system supporting start of the vehicle at a low temperature according to the first aspect of the present invention.

The implementation of the present invention has the following beneficial effects:
(1) In the embodiments of the present invention, the coolant is heated through the coolant heater and the heat is transferred to the battery heat exchanger, without adding the additional refrigerant state change device. After the refrigerant absorbs the heat of the coolant through the battery heat exchanger, the temperature of the refrigerant is increased and the refrigerant is transitioned from liquid to gas, so that the compressor can operate normally at the low temperature, realizing start of the heat pump system at the low temperature, and then, the passenger compartment is heated by working of the compressor, solving the problem that it is difficult to start the heat pump system at the low temperature and reducing the use of additional components, which can reduce system cost and avoid maintenance of corresponding devices, and is conducive to energy conservation.
(2) In the embodiments of the present invention, not only thermal connection between the coolant system and the heat pump system is realized, but also the use of the compressor to work at the low temperature is supported to heat the passenger compartment and the battery pack, instead of using a water heater to heat the passenger compartment and the battery pack, thereby satisfying the optimal operating temperature of a battery, reducing its attenuation at the low temperature, helping to improve the battery life and increase drivable mileage, and reducing energy consumption.

Some additional aspects and advantages of the present invention will be given in the following description, and some will become apparent from the following description, or be understood through the practice of the present invention.

### BRIEF DESCRIPTION OF THE DRAWINGS

In order to illustrate the technical solutions in the examples of the present invention or the existing technology more clearly, the accompanying drawings that need to be used in the description of the examples or the existing technology will be introduced briefly below. Obviously, the drawings described below are only some examples of the present invention. For those of ordinary skill in the art, other drawings can be acquired from these drawings without creative work.
FIG. 1 is an architecture diagram of a multi-circuit heat pump air-conditioning system supporting start of a vehicle at a low temperature according to an embodiment of the present invention.
FIG. 2 is a working principle diagram of a heating mode 1 according to an embodiment of the present invention.
FIG. 3 is a working principle diagram of a heating mode 2 according to an embodiment of the present invention.
FIG. 4 is a working principle diagram of a heating mode 3 according to an embodiment of the present invention.
FIG. 5 is a working principle diagram of a heating mode 4 according to an embodiment of the present invention.
FIG. 6 is a working principle diagram of a heating mode 5 according to an embodiment of the present invention.
FIG. 7 is a working principle diagram of a heating mode 6 according to an embodiment of the present invention.
FIG. 8 is a working principle diagram of a heating mode 7 according to an embodiment of the present invention.
FIG. 9 is a working principle diagram of a refrigerating mode 1 according to an embodiment of the present invention.
FIG. 10 is a working principle diagram of a heating mode 8 and a heating mode 9 according to an embodiment of the present invention.
FIG. 11 is a working principle diagram of a refrigerating mode 2 according to an embodiment of the present invention.
FIG. 12 is a working principle diagram of a refrigerating mode 3 according to an embodiment of the present invention.
FIG. 13 is a working principle diagram of a heating mode 10 and a heating mode 11 according to an embodiment of the present invention.
FIG. 14 is a working principle diagram of a heating mode 12 and a heating mode 13 according to an embodiment of the present invention.

### DETAILED DESCRIPTION OF THE EMBODIMENTS

In order to make the objects, technical solutions and advantages of the embodiments of the present invention more clearly, the technical solutions in the embodiments of the present invention will be clearly and completely described below with reference to the accompanying drawings in the embodiments of the present invention. Obviously, the described embodiments are only some but not all of the embodiments of the present invention. Based on the embodiments of the present invention, all other embodiments acquired by those of ordinary skill in the art without creative work shall fall within the protection scope of the present invention. These embodiments are shown in the accompanying drawings, where identical or similar labels represent identical or similar elements or those with identical or similar functions throughout the description.

### Embodiments

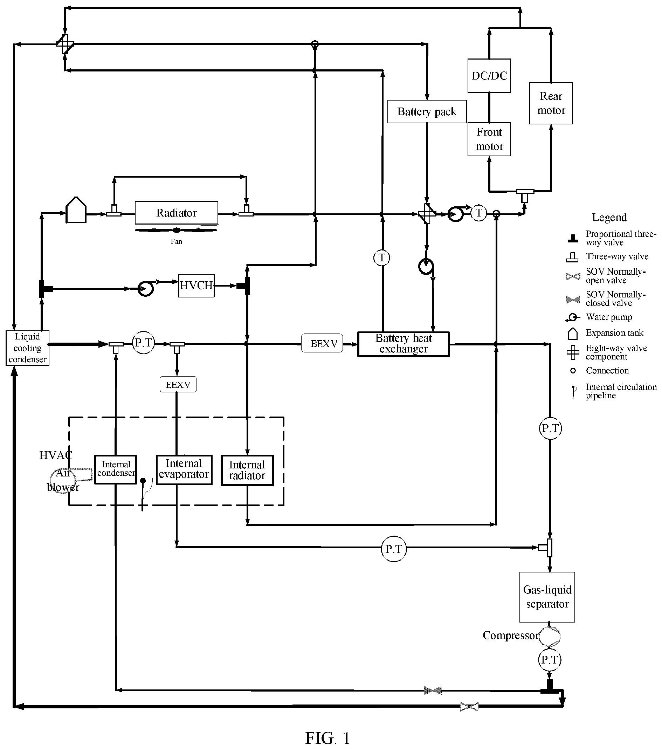

FIG. 1 is an architecture diagram of a multi-circuit heat pump air-conditioning system supporting start of a vehicle at a low temperature according to an example of the present invention. Specifically, as shown in FIG. 1, the multi-circuit heat pump air-conditioning system supporting start of a vehicle at a low temperature according to the embodiment of the present invention includes a coolant system, a heat pump system and an electronic control system.

The coolant system includes a coolant circuit. The coolant circuit includes a DC/DC (Direct Current), a motor, a battery pack, a coolant pipeline, and hydraulic valves and at least one water pump arranged in the coolant pipeline. The at least one water pump is configured to pump coolant through the coolant circuit along a specific flow direction.

Specifically, the motor includes a front motor and a rear motor. The front motor is connected in series with the DC/DC. The front motor and the DC/DC are connected in parallel with the rear motor.

Specifically, the hydraulic valves include, but are not limited to, three-way valves, proportional three-way valves, four-way valves, eight-way valves, and normally-open valves. An eight-way valve may be replaced with two four-way valves. According to different connection states of the four-way valves and/or the eight-way valves, series and parallel states may be formed between a battery system and an electric drive system.

The heat pump system includes a refrigerant circuit. The refrigerant circuit includes a gas-liquid separator, a compressor, a battery heat exchanger, a liquid cooling condenser, a coolant heater, a refrigerant pipeline, and hydraulic valves arranged in the refrigerant pipeline. The gas-liquid separator is generally installed between an evaporator and the compressor, and main functions of the gas-liquid separator include that: ① low-temperature steam returning to the compressor is prevented from carrying excessive liquid drops, liquid refrigerant is prevented from entering a compressor cylinder, and the compressor is prevented from being slugged by liquid; ② too much refrigerant is prevented from diluting compressor oil; ③ the separator also has functions of filtering, oil return, liquid storage, etc. Filtering the refrigerant may ensure that a gas entering the compressor is clean. The oil return may ensure sufficient lubrication by the compressor oil. The liquid storage refers to accommodating part of the refrigerant that is not used in the system, and in addition to preventing liquid slugging, it may ensure sufficient refrigerant circulation in the system. The coolant heater is configured to heat a coolant when an ambient temperature is lower than a preset temperature and the heat pump system is in a non-working state. The compressor is configured to work to heat the refrigerant in the refrigerant pipeline after the heat pump system is started. The refrigerant circuit has a high pressure side and a low pressure side. The compressor works to enable the refrigerant circuit to form the high pressure side and the low pressure side, thereby prompting the refrigerant to flow.

The electronic control system includes a communication unit, a processor and a switching module. The communication unit is configured to receive an ambient temperature outside a vehicle, temperature control requirements of a passenger compartment and the battery pack, and a heat storage state of the battery pack. The processor is configured to generate a working mode switching instruction according to the ambient temperature outside the vehicle, the temperature control requirements of the passenger compartment and the battery pack, and the heat storage state of the battery pack. The switching module is configured to switch connection states of the coolant circuit and/or the refrigerant circuit in response to the working mode switching instruction.

The communication unit is electrically connected with the processor. The processor is electrically connected with the switching module. The coolant circuit is thermally connected with the refrigerant circuit. The thermal connection here refers to heat exchange between the coolant circuit and the refrigerant circuit. The heat exchange between the coolant and the refrigerant in the two circuits is implemented through the battery heat exchanger or the liquid cooling condenser. The heat exchange in the heat exchanger is not a single heat exchange, but a complex heat exchange process involving heat convection and heat conduction.

Specifically, an outside temperature sensor is disposed outside a vehicle body, for example, at a hood, a luggage compartment cover or windows, to detect the ambient temperature outside the vehicle and send it to the communication unit.

Specifically, the battery heat exchanger may be used as an evaporator.

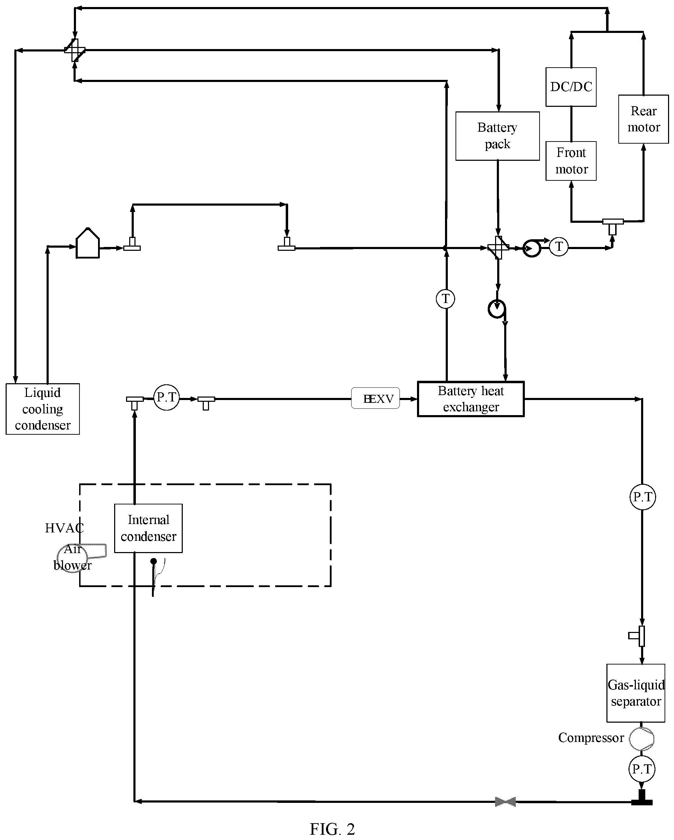

FIG. 2 is a working principle diagram of a heating mode 1 according to an embodiment of the present invention. Referring to FIG. 2, in an embodiment, a multi-circuit heat pump air-conditioning system works in the heating mode 1. The multi-circuit heat pump air-conditioning system includes a coolant system, a heat pump system and an electronic control system.

The coolant system includes an electric drive module, a battery pack, a coolant pipeline, and hydraulic valves and at least one water pump arranged in the coolant pipeline. An end of the electric drive module is connected with an end of a liquid cooling condenser through a hydraulic valve. Another end of the liquid cooling condenser is connected with an end of an expansion tank. Another end of the expansion tank is connected with an end of a battery heat exchanger through a hydraulic valve. Another end of the battery heat exchanger is connected with an end of the battery pack through a hydraulic valve. Another end of the battery pack is connected with another end of the electric drive module through a hydraulic valve.

A water pump configured to pump a coolant to flow in a direction from the battery pack to the electric drive module is arranged between the battery pack and the electric drive module. A water pump configured to pump a coolant to flow in a direction from the liquid cooling condenser to the battery heat exchanger is arranged between the expansion tank and the battery heat exchanger. The direction in which the coolant flows is: electric drive module 4 liquid cooling condenser 4 battery heat exchanger 4 battery pack 4 electric drive module, specifically as shown in FIG. 2.

The heat pump system includes a refrigerant circuit, an HVAC (Heating, Ventilation and Air Conditioning) assembly (i.e., HVAC shown in FIG. 2) and a battery electronic expansion valve. The refrigerant circuit includes a gas-liquid separator, a compressor, a battery heat exchanger, a liquid cooling condenser, a coolant heater, a refrigerant pipeline, and hydraulic valves arranged in the refrigerant pipeline. The HVAC assembly includes an internal condenser, an air blower, an air door and an air duct. The electronic control system includes an air-conditioning controller. The HVAC assembly is electrically connected with the air-conditioning controller. The air-conditioning controller is electrically connected with a processor. Opening of the battery electronic expansion valve increases or decreases according to its loads.

An end of the internal condenser is connected with an end of the battery electronic expansion valve. Another end of the battery electronic expansion valve is connected with another end of the battery heat exchanger. An end of the battery heat exchanger is connected with an end of the gas-liquid separator. Another end of the gas-liquid separator is connected with an end of the compressor. Another end of the compressor is connected with another end of the internal condenser. The refrigerant circuit has a high pressure side and a low pressure side. The compressor works to enable the refrigerant circuit to form the high pressure side and the low pressure side, thereby prompting the refrigerant to flow in a specific flow direction in the refrigerant circuit. The direction in which the refrigerant flows is: internal condenser 4 battery heat exchanger 4 gas-liquid separator 4 compressor 4 internal condenser, specifically as shown in FIG. 2.

When an ambient temperature outside a vehicle is within a first preset temperature range and only a passenger compartment needs to be heated, the heat pump system absorbs heat from a battery system through the battery heat exchanger to heat the passenger compartment. At this time, a Coefficient of Performance (COP) is greater than 1. When temperatures of components in a motor circulation system are higher than that of the battery system, the electronic control system determines a heat conduction connection mode of the multi-circuit heat pump air-conditioning system to be the heating mode 1.

Values of the first preset temperature range may be set according to actual needs. For example, the values of the first preset temperature range may be [-10 °C, 10 °C], [-11 °C, 9 °C], [-12 °C, 12 °C] or the like. It should be pointed out that this embodiment is used only to illustrate the values of the first preset temperature range, and should not be considered as a limitation on the protection scope of the present invention. In practical applications, the values of the first preset temperature range include, but are not limited to, the above temperature ranges.

In other solutions, the multi-circuit heat pump air-conditioning system may not include a radiator as shown in FIG. 2, or include a radiator as shown in FIG. 1 and the radiator is disposed to be in a short-circuit state.

Specifically, in this mode, an air conditioner may be switched to work in a partial internal circulation state. At this time, fresh air is mixed with circulating air in the passenger compartment.

In an embodiment, the multi-circuit heat pump air-conditioning system may work in the heating mode 1 (for detail, reference may be made to the above description, which will not be repeated here) or in a heating mode 2.

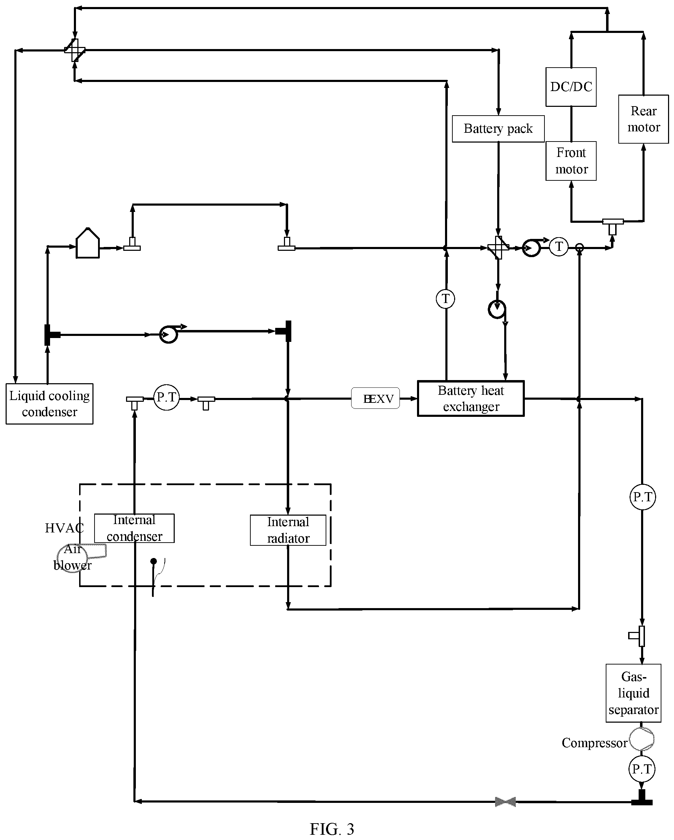

FIG. 3 is a working principle diagram of a heating mode 2 according to an embodiment of the present invention. Referring to FIG. 2 and FIG. 3, compared with FIG. 2, an HVAC assembly in a multi-circuit heat pump air-conditioning system shown in FIG. 3 further includes an internal radiator. Connection relationships between the internal radiator and other components in the multi-circuit heat pump air-conditioning system are: specifically, another end of a liquid cooling condenser is connected with an end of the internal radiator, and another end of the internal radiator is connected with an end of a motor.

When an ambient temperature outside a vehicle is within a first preset temperature range and a passenger compartment needs to be heated, the passenger compartment may be heated by residual heat of a motor. When this method may not meet the heating requirement of the passenger compartment, a heat pump system may be used to heat in combination with the heating mode 1. The heat pump system absorbs heat from a battery system through a battery heat exchanger to heat the passenger compartment. At this time, COP>1. When temperatures of components in a motor circulation system are higher than that of the battery system, an electronic control system determines a heat conduction connection mode of the multi-circuit heat pump air-conditioning system to be the heating mode 2. The heating mode 2 is a mixed heating mode, with COP>1.

Directions in which coolant flows in the heating mode 2 are: electric drive module 4 liquid cooling condenser 4 battery heat exchanger 4 battery pack 4 electric drive module, and electric drive module 4 liquid cooling condenser 4 internal radiator 4 electric drive module.

A direction in which the refrigerant flows in the heating mode 2 is: internal condenser 4 battery heat exchanger 4 gas-liquid separator 4 compressor 4 internal condenser.

In an embodiment, the multi-circuit heat air-conditioning system pump may work in the heating mode 3 (for detail, reference may be made to the above description, which will not be repeated here) or in a heating mode 3.

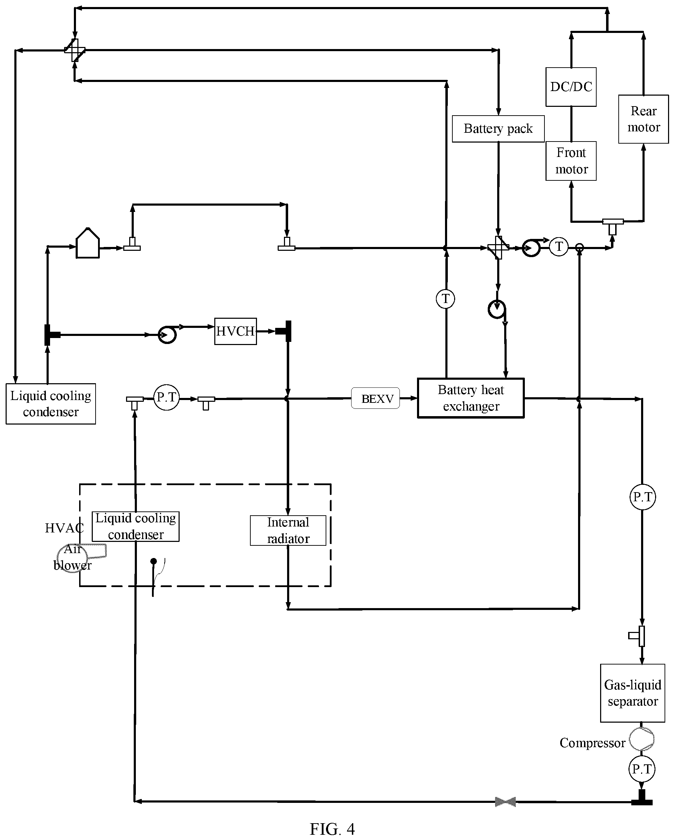

FIG. 4 is a working principle diagram of a heating mode 3 according to an embodiment of the present invention. Referring to FIG. 3 and FIG. 4, compared with FIG. 3, connection relationships between respective components in a multi-circuit heat pump air-conditioning system shown in FIG. 4 further include the following contents: another end of a liquid cooling condenser is connected with an end of a coolant heater, another end of the coolant heater is connected with an end of an internal radiator, and another end of the internal radiator is connected with another end of an electric drive module.

When an ambient temperature outside a vehicle is within a second preset temperature range, a battery has residual heat storage, and a passenger compartment needs to be heated, the heat pump and the coolant heater are used to heat the passenger compartment at the same time. When the heat pump is heating, COP>1. When the coolant heater is heating, COP=1. Therefore, the heating mode 3 is a mixed heating mode, with COP>1.

Heat sources of the passenger compartment are from a heat pump system and the coolant heater. Therefore, compared with the heating mode 1, the heating mode 3 may provide more heat for the passenger compartment. When a temperature of a battery system is too low to meet the thermal comfort requirement of the passenger compartment, or the passenger compartment has a zoning requirement (for example, a driver and a co-driver require different air outlet temperatures), the heating mode 3 may be used to heat. Specifically, the second preset temperature range includes, but is not limited to, ambient temperature outside a vehicle< -10 °C.

Directions in which the coolant flows in the heating mode 3 are: electric drive module 4 liquid cooling condenser 4 battery heat exchanger 4 battery pack 4 electric drive module, and electric drive module 4 liquid cooling condenser 4 coolant heater 4 internal radiator 4 electric drive module.

A direction in which the refrigerant flows in the heating mode 3 is: internal condenser 4 battery heat exchanger 4 gas-liquid separator 4 compressor 4 internal condenser.

Specifically, when the heating mode 3 is adopted, an air conditioner may be switched to work in an external circulation state. This mode may support a defrosting operation to remove frost on an evaporator in the passenger compartment. Specifically, the coolant heater operates at a non-full power. For example, the power of the coolant heater in the air-conditioning system is 8 KW. Here, operating at a non-full power is only to make up for insufficient heat source part of the heat pump. Not operating at a power of 8 KW may achieve the purpose of energy conservation.

Optionally, the coolant heater includes, but is not limited to, a High Voltage Coolant Heater (HVCH), wherein the high voltage heater is also called PTC (Positive Temperature Coefficient) water heater.

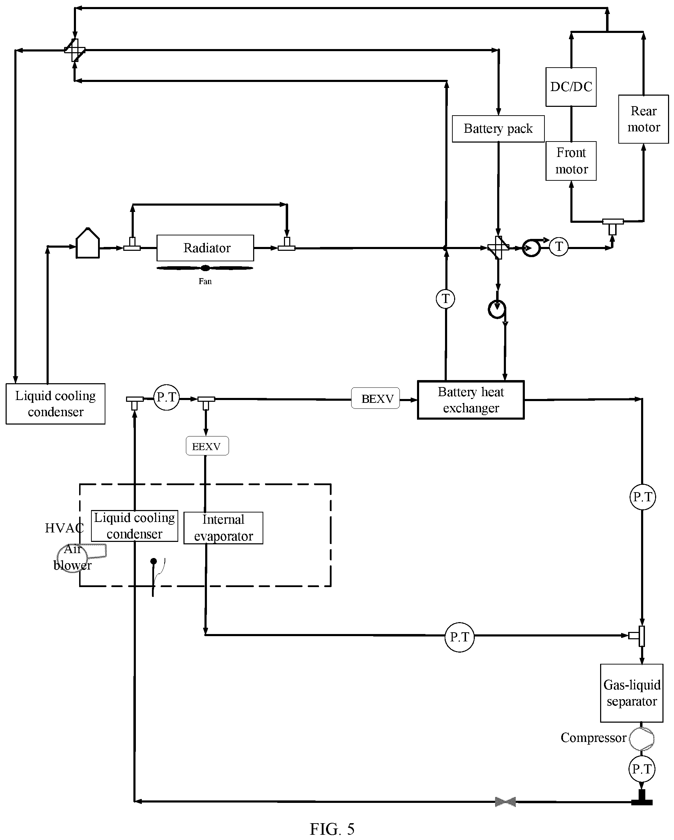

FIG. 5 is a working principle diagram of a heating mode 4 according to an example of the present invention. Referring to FIG. 2 and FIG. 5, compared with FIG. 2, an HVAC assembly in a multi-circuit heat pump air-conditioning system shown in FIG. 5 further includes an internal evaporator and an evaporator electronic expansion valve. Connection relationships between respective components in the multi-circuit heat pump air-conditioning system further include the following contents: an end of an internal condenser is connected with an end of the evaporator electronic expansion valve, another end of the evaporator electronic expansion valve is connected with an end of the internal evaporator, and another end of the internal evaporator is connected with an end of a gas-liquid separator.

Specifically, when only heating/refrigerating function(s) is/are operating, opening of the evaporator electronic expansion valve increases or decreases according to its loads. When dehumidifying and demisting functions as well as a function of removing frost on the evaporator are operating, the electronic expansion valve is fully opened.

When an ambient temperature outside a vehicle is within a second preset temperature range, a battery has no or little heat storage, and a passenger compartment needs to be heated, a heat pump system is used to absorb heat from a battery system while the evaporator in the passenger compartment is used to absorb heat from ambient air in the passenger compartment for heating the passenger compartment. The heat pump system that absorbs heat from the battery system has COP>1, and the evaporator in the passenger compartment that absorbs heat from ambient air in the passenger compartment has COP=1. This mode is a mixed heating mode, with COP>1.

A direction in which the coolant flows in the heating mode 4 is: electric drive module 4 liquid cooling condenser 4 battery heat exchanger 4 battery pack 4 electric drive module.

Directions in which the refrigerant flows in the heating mode 4 are: internal condenser 4 battery heat exchanger 4 gas-liquid separator 4 compressor 4 internal condenser, and internal condenser 4 internal evaporator 4 gas-liquid separator 4 compressor 4 internal condenser.

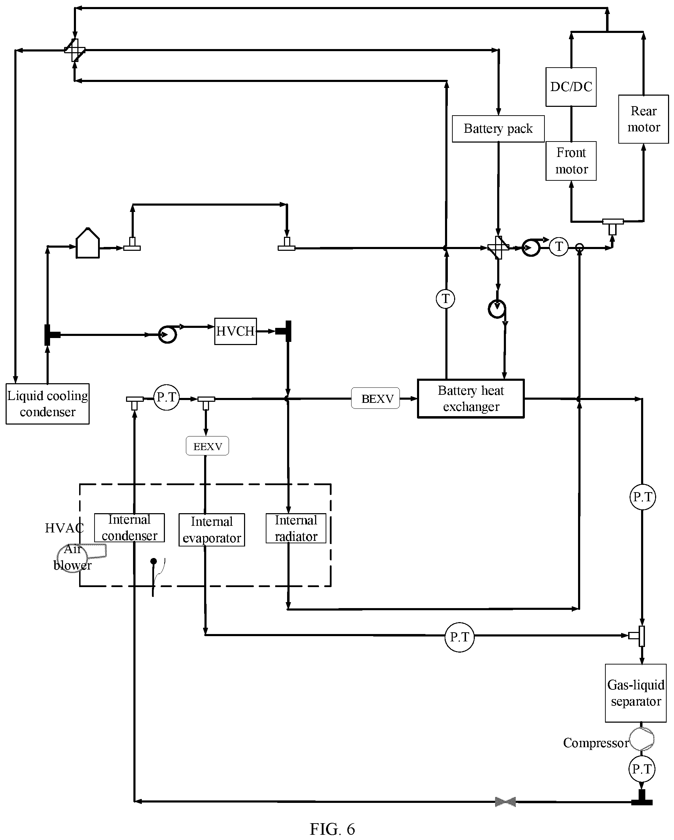

FIG. 6 is a working principle diagram of a heating mode 5 according to an embodiment of the present invention. Referring to FIG. 4 and FIG. 6, compared with FIG. 4, an HVAC assembly of a multi-circuit heat pump air-conditioning system shown in FIG. 6 further includes an internal evaporator and an evaporator electronic expansion valve. Connection relationships between respective components in the multi-circuit heat pump air-conditioning system further include the following contents: an end of an internal condenser is connected with an end of the evaporator electronic expansion valve, another end of the evaporator electronic expansion valve is connected with an end of the internal evaporator, and another end of the internal evaporator is connected with an end of a gas-liquid separator.

When an ambient temperature outside a vehicle is within a second preset temperature range, a battery has heat storage, and a passenger compartment needs to be heated at a high power, a heat pump system is used to absorb heat from a battery system for helping a coolant heater to heat (operating at a non-full power), and the evaporator in the passenger compartment is used to absorb ambient heat to heat the passenger compartment. This mode is a mixed heating mode, with COP>1. Specifically, in this mode, air is mixed in the air-conditioning system, and the internal evaporator in the HVAC assembly is connected in series with the internal condenser in the HVAC assembly.

Directions in which the coolant flows in the heating mode 5 are: electric drive module 4 liquid cooling condenser 4 battery heat exchanger 4 battery pack 4 electric drive module, and electric drive module 4 liquid cooling condenser 4 coolant heater 4 internal radiator 4 electric drive module.

Directions in which the refrigerant flows in the heating mode 5 are: internal condenser 4 battery heat exchanger 4 gas-liquid separator 4 compressor 4 internal condenser, and internal condenser 4 internal evaporator 4 gas-liquid separator 4 compressor 4 internal condenser.

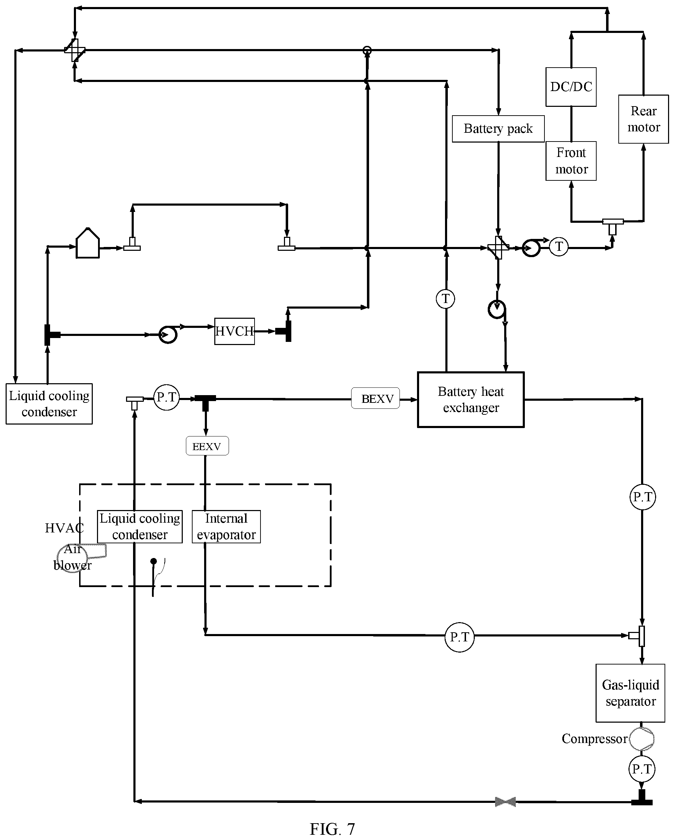

FIG. 7 is a working principle diagram of a heating mode 6 according to an embodiment of the present invention. Referring to FIG. 2 and FIG. 7, compared with the multi-circuit heat pump air-conditioning system shown in FIG. 2, an HVAC assembly shown in FIG. 7 further includes an internal evaporator and an evaporator electronic expansion valve. another end of a liquid cooling condenser is connected with an end of a coolant heater, another end of the coolant heater is connected with an end of a battery pack, another end of an internal condenser is connected with an end of the evaporator electronic expansion valve, another end of the evaporator electronic expansion valve is connected with an end of the internal evaporator, and another end of the internal evaporator is connected with an end of a gas-liquid separator.

When an ambient temperature outside a vehicle is within a second preset temperature range, a battery has no heat storage, and a passenger compartment needs to be heated, under extreme conditions, for example, the ambient temperature outside a vehicle is about -30 °C and a coolant temperature of a battery system is low so that it is impossible to take heat therefrom, the passenger compartment is heated quickly by working of a compressor. Specifically, the coolant heater is first used to heat a coolant. At this time, a battery heat exchanger is started as an evaporator, and the internal evaporator is closed. After a preset period of time, for example, 4-5 minutes, the coolant heater and the battery heat exchanger are closed. By series connection of the internal evaporator with the internal condenser and working of the compressor, the passenger compartment is heated. Therefore, starting at a low temperature and using the compressor to work are achieved.

In this mode, COP=1. Air is mixed in the air-conditioning system, and an optimal proportion of internal and external circulation and minimum comfort requirements need to be maintained. If complete internal circulation is selected, it is easy to cause passengers to feel depressed and increase a risk of fogging.

Directions in which the coolant flows in the heating mode 6 are: electric drive module → liquid cooling condenser → battery heat exchanger → battery pack → electric drive module, and electric drive module → liquid cooling condenser → coolant heater → battery pack → electric drive module.

Directions in which the refrigerant flows in the heating mode 6 are: internal condenser → battery heat exchanger → gas-liquid separator → compressor → internal condenser, and internal condenser → internal evaporator → gas-liquid separator → compressor → internal condenser.

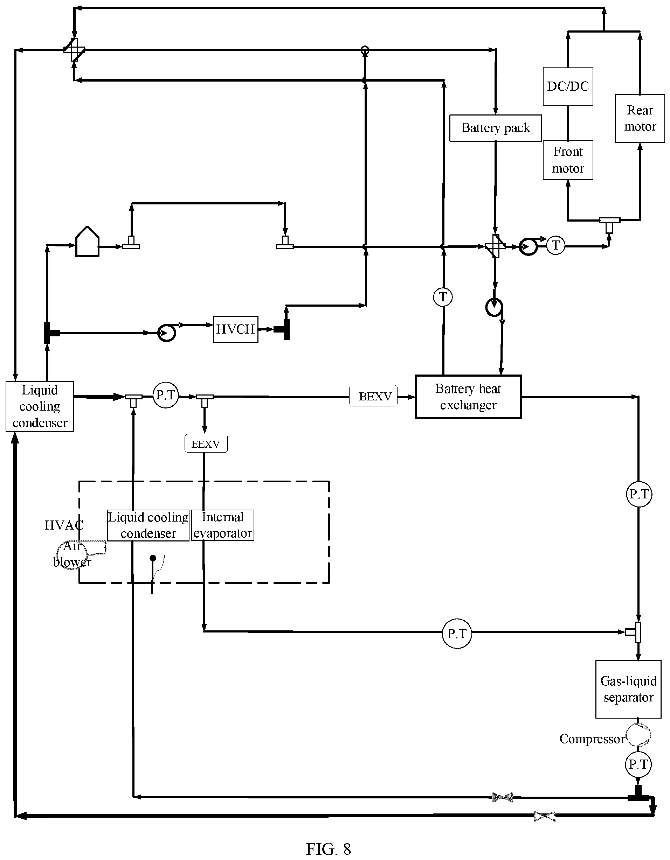

FIG. 8 is a working principle diagram of a heating mode 7 according to an embodiment of the present invention. Referring to FIG. 7 and FIG. 8, compared with the multi-circuit heat pump air-conditioning system shown in FIG. 7, in FIG. 8, another end of a gas-liquid separator is connected with an end of a liquid cooling condenser, another end of the liquid cooling condenser is connected with an end of a battery electronic expansion valve, and another end of the battery electronic expansion valve is connected with a battery heat exchanger.

When an ambient temperature outside a vehicle is within a second preset temperature range, and a battery and a passenger compartment need to be heated, under extreme conditions that the ambient temperature outside a vehicle is about -30 °C and heat is not taken from a battery, the passenger compartment may be quickly heated. When there is residual heating power, the battery may be heated through the liquid cooling condenser, mainly to improve the charging efficiency and the discharging current of the battery. A three-way valve at the downstream of a compressor controls refrigerant flow distribution, giving priority to ensuring the comfort of the passenger compartment.

In this mode, specifically, a coolant heater is first used to heat a coolant. At this time, the battery heat exchanger is started as an evaporator, and an internal evaporator is closed. After a preset period of time, for example, 4-5 minutes, the coolant heater and the battery heat exchanger are closed. By series connection of the internal evaporator with an internal condenser and working of the compressor, the passenger compartment is heated. Therefore, starting at a low temperature and using the compressor to work are achieved.

Directions in which the coolant flows in the heating mode 7 are: electric drive module 4 liquid cooling condenser 4 battery heat exchanger 4 battery pack 4 electric drive module, and electric drive module 4 liquid cooling condenser 4 coolant heater 4 battery pack → electric drive module.

A direction in which the refrigerant flows in the heating mode 7 is: liquid cooling condenser / internal condenser 4 battery heat exchanger / internal evaporator 4 gas-liquid separator 4 compressor 4 liquid cooling condenser / internal condenser.

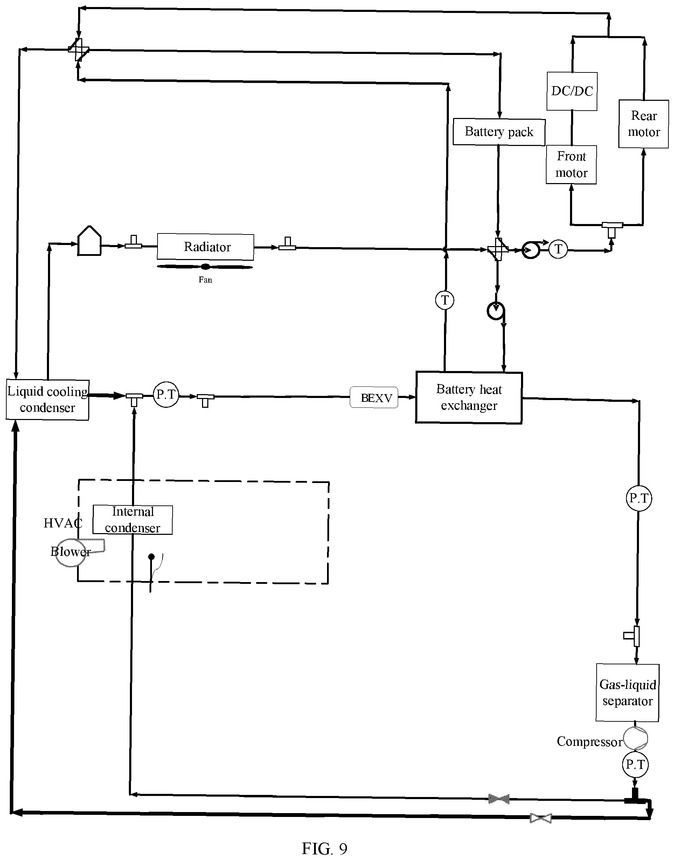

FIG. 9 is a working principle diagram of a refrigerating mode 1 according to an embodiment of the present invention. Referring to FIG. 2 and FIG. 9, compared with the multi-circuit heat pump air-conditioning system shown in FIG. 2, a heat pump system shown in FIG. 9 further includes a radiator. Another end of a liquid cooling condenser is connected with an end of the radiator, another end of the radiator is connected with an end of a battery heat exchanger through a hydraulic valve, an end of the liquid cooling condenser is connected with another end of a gas-liquid separator, another end of the liquid cooling condenser is connected with an end of a battery electronic expansion valve, and another end of the battery electronic expansion valve is connected with the battery heat exchanger.

When a battery temperature reaches above 40 °C in summer, a battery has a strong refrigerating requirement, and there is a small heating requirement in a passenger compartment, after the refrigerant flows through a compressor, and its flow distribution is controlled through a three-way valve, so that, in addition to meeting the heating requirement of the passenger compartment, residual heat may be transferred to an environment through a coolant condenser and the radiator for heat dissipation. In this mode, the battery is connected in series with a motor through an eight-way valve in a large cycle, and the radiator works.

A direction in which the coolant flows in the refrigerating mode 1 is: electric drive module → liquid cooling condenser → radiator → battery heat exchanger → battery pack → electric drive module.

A direction in which the refrigerant flows in the refrigerating mode 1 is: liquid cooling condenser / internal condenser → battery heat exchanger → gas-liquid separator → compressor → liquid cooling condenser / internal condenser.

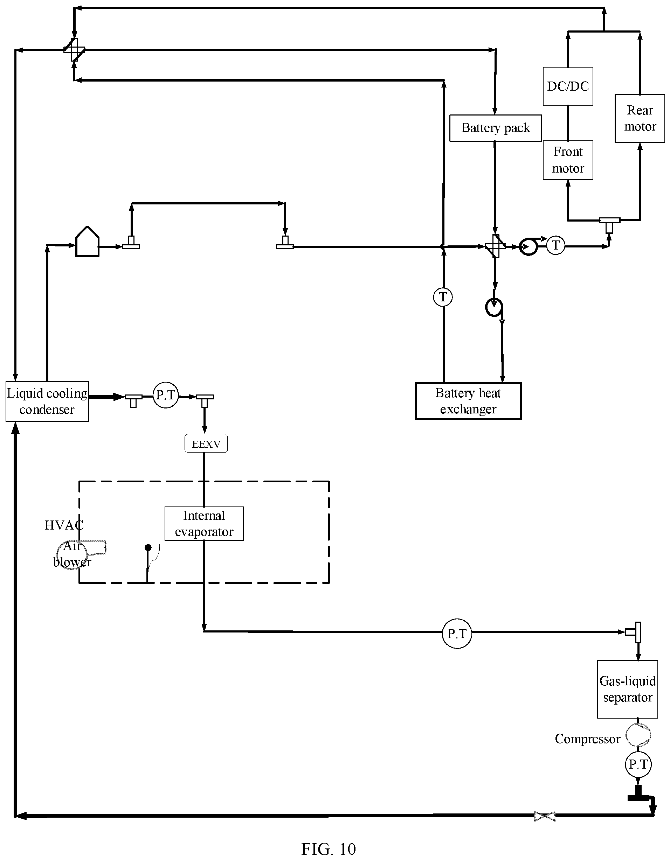

FIG. 10 is a working principle diagram of a heating mode 8 and a heating mode 9 according to an embodiment of the present invention. Referring to FIG. 10, a heat pump system further includes an HVAC assembly. The HVAC assembly includes an internal evaporator and an evaporator electronic expansion valve. An electronic control system further includes an air-conditioning controller. The HVAC assembly is electrically connected with the air-conditioning controller. The air-conditioning controller is electrically connected with a processor.

An end of a liquid cooling condenser is connected with an end of a motor through a hydraulic valve. Another end of the liquid cooling condenser is connected with an end of a battery heat exchanger through a hydraulic valve. Another end of the battery heat exchanger is connected with an end of a battery pack through a hydraulic valve. Another end of the battery pack is connected with another end of the motor through a hydraulic valve.

Another end of the liquid cooling condenser is connected with an end of the evaporator electronic expansion valve. Another end of the evaporator electronic expansion valve is connected with an end of the internal evaporator. Another end of the internal evaporator is connected with an end of a gas-liquid separator. Another end of the gas-liquid separator is connected with an end of a compressor. Another end of the compressor is connected with an end of the liquid cooling condenser.

When an ambient temperature outside a vehicle is within a third preset temperature range, and there is residual heat in a passenger compartment to pre-heat a battery / store heat for the battery, the evaporator in the passenger compartment is used to absorb heat in an environment to heat the battery. Generally, a remote air-conditioning system before or after driving is applied. The heating mode 8 is a partial internal circulation state, and the heating mode 9 is a complete internal circulation state. A coolant system does not include a radiator or the radiator is short-circuited.

Specifically, the third preset temperature range includes, but is not limited to, ambient temperature outside a vehicle>-10 °C.

A direction in which the coolant flows in the heating modes 8 and 9 is: electric drive module 4 liquid cooling condenser 4 battery heat exchanger 4 battery pack 4 electric drive module.

A direction in which the refrigerant flows in the heating modes 8 and 9 is: internal condenser → gas-liquid separator → compressor → liquid cooling condenser→ internal condenser.

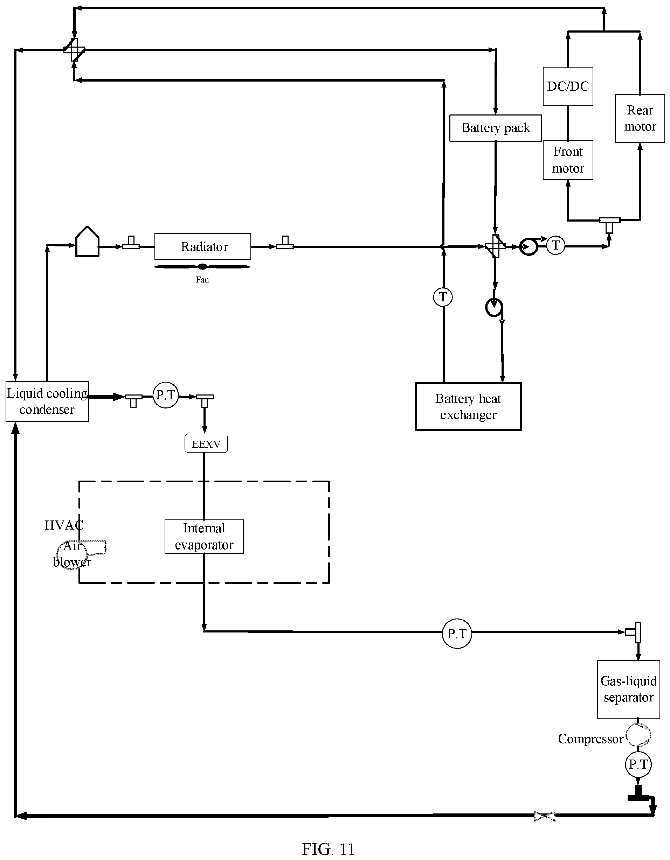

FIG. 11 is a working principle diagram of a refrigerating mode 2 according to an embodiment of the present invention. FIG. 11 shows a mode in which a passenger compartment has a refrigerating requirement in summer. In this mode, an internal condenser is in an activated state, and dehumidifies fresh air by way of reheating to meet a dehumidification requirement of warming passenger compartment environment. Compared with FIG. 10, a multi-circuit heat pump air-conditioning system shown in FIG. 11 further includes a radiator. Another end of a liquid cooling condenser is connected with an end of the radiator, and another end of the radiator is connected with an end of a battery heat exchanger through a hydraulic valve. The radiator works, and air is mixed in the air-conditioning system.

A direction in which the coolant flows in the refrigerating mode 2 is: electric drive module → liquid cooling condenser → radiator → battery heat exchanger → battery pack → electric drive module.

A direction in which the refrigerant flows in the refrigerating mode 2 is: internal evaporator → gas-liquid separator → compressor → liquid cooling condenser → internal evaporator.

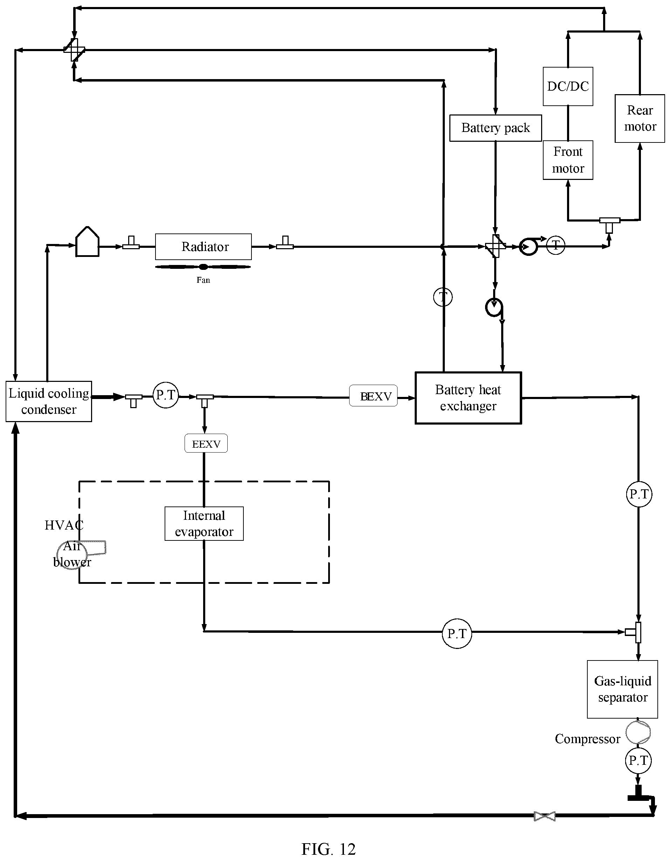

FIG. 12 is a working principle diagram of a refrigerating mode 3 according to an embodiment of the present invention. FIG. 12 shows a mode in which a passenger compartment and a battery system are simultaneously refrigerated in summer. Compared with FIG. 11, in FIG. 12, another end of a liquid cooling condenser is connected with another end of a battery heat exchanger, and an end of the battery heat exchanger is connected with an end of a gas-liquid separator.

A direction in which the coolant flows in the refrigerating mode 3 is: electric drive module → liquid cooling condenser → radiator → battery heat exchanger → battery pack → electric drive module.

A direction in which the refrigerant flows in the refrigerating mode 3 is: liquid cooling condenser → internal evaporator / battery heat exchanger → gas-liquid separator → compressor → liquid cooling condenser.

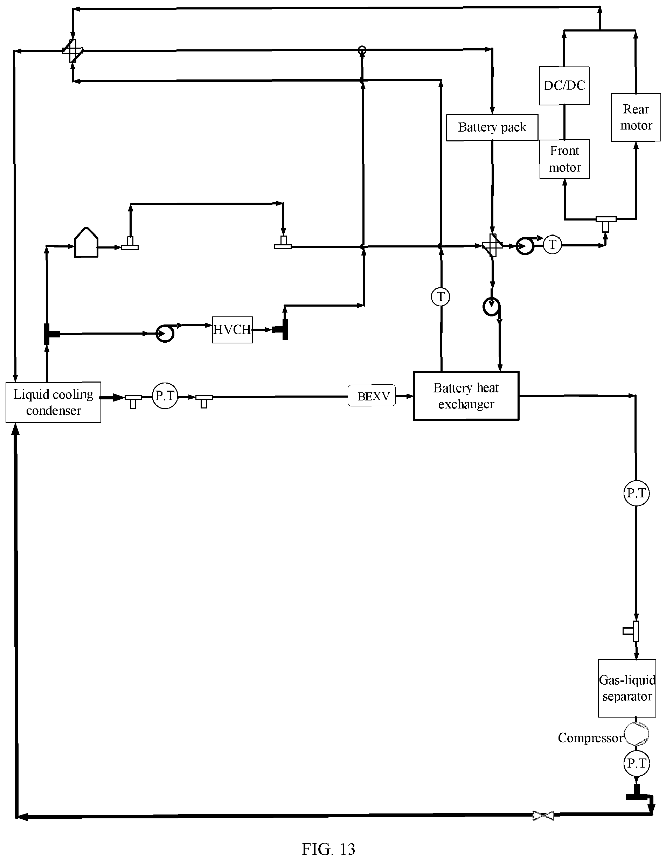

FIG. 13 is a working principle diagram of a heating mode 10 and a heating mode 11 according to an embodiment of the present invention. A multi-circuit heat pump air-conditioning system supporting start of a vehicle at a low temperature shown in FIG. 13 includes a coolant system, a heat pump system and an electronic control system.

The coolant system includes a coolant circuit. The coolant circuit includes a DC/DC, a motor, a battery pack, a coolant pipeline, and hydraulic valves and at least one water pump arranged in the coolant pipeline. The at least one water pump is configured to pump a coolant through the coolant circuit along a specific flow direction. The coolant system may not include a radiator or an electrical connection state of the radiator is set to be short-circuited, and the refrigerant transfers heat to a battery through a coolant condenser.

The heat pump system includes a refrigerant circuit. The refrigerant circuit includes a gas-liquid separator, a compressor, a battery heat exchanger, a liquid cooling condenser, a coolant heater, a battery electronic expansion valve, a refrigerant pipeline, and hydraulic valves arranged in the refrigerant pipeline.

Connection relationships between respective components in the refrigerant circuit are as follows:

an end of the liquid cooling condenser is connected with an end of the motor through a hydraulic valve, another end of the liquid cooling condenser is connected with an end of the battery heat exchanger through a hydraulic valve, another end of the battery heat exchanger is connected with an end of the battery pack through a hydraulic valve, and another end of the battery pack is connected with another end of the motor through a hydraulic valve;

another end of the liquid cooling condenser is connected with an end of the coolant heater, and another end of the coolant heater is connected with another end of the battery pack;

another end of the liquid cooling condenser is connected with an end of the battery electronic expansion valve, another end of the battery electronic expansion valve is connected with another end of the battery heat exchanger, an end of the battery heat exchanger is connected with an end of the gas-liquid separator, another end of the gas-liquid separator is connected with an end of the compressor, and another end of the compressor is connected with another end of the liquid cooling condenser.

When an ambient temperature outside a vehicle is within a second preset temperature range, and only the battery needs to be heated, the compressor is used as a heat source to quickly heat the battery. When a vehicle speed has a higher priority or charging is conducted in a cold environment, these modes are more effective, with COP=1.

Directions in which the coolant flows in the heating modes 10 and 11 are: electric drive module 4 liquid cooling condenser 4 battery heat exchanger 4 battery pack 4 electric drive module, and electric drive module 4 liquid cooling condenser 4 coolant heater 4 battery pack 4 electric drive module.

A direction in which the refrigerant flows in the heating modes 9 and 10 is: liquid cooling condenser 4 battery heat exchanger 4 gas-liquid separator 4 compressor 4 liquid cooling condenser.

Specifically, the heating mode 9 differs from the heating mode 10 in that: in the heating mode 9, the coolant heater is used to assist in starting the heat pump system and is then closed, while in the heating mode 10, when the battery has a large heat requirement, the coolant heater is no longer closed (operating at a non-full power) and heats the battery together with the heat pump system.

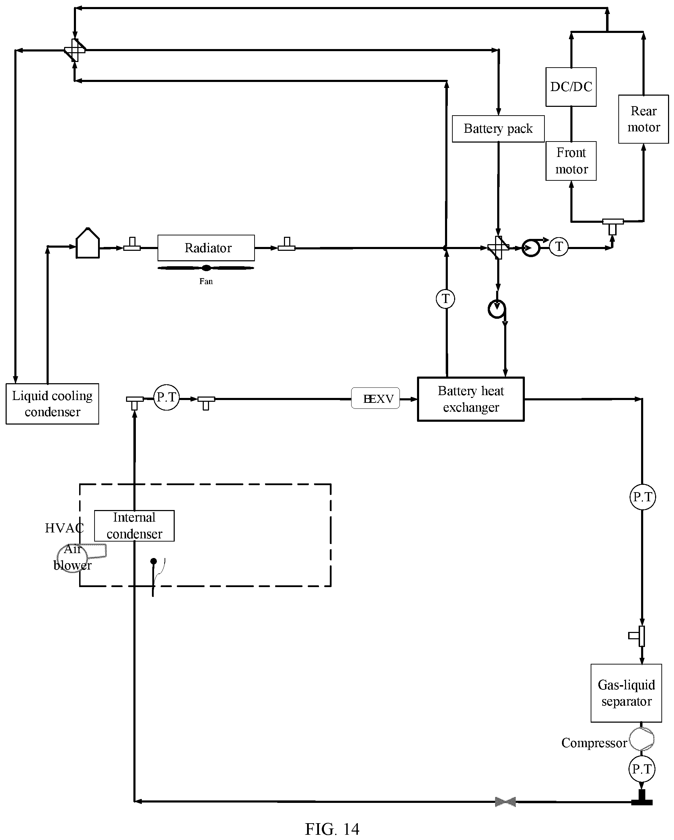

FIG. 14 is a working principle diagram of a heating mode 12 and a heating mode 13 according to an embodiment of the present invention. Referring to FIG. 14, a coolant system further includes a radiator, and a heat pump system further includes an HVAC assembly and a battery electronic expansion valve. The HVAC assembly includes an internal condenser.

An end of a battery pack is connected with an end of a motor through a hydraulic valve, and another end of the battery pack is connected with another end of the motor through a hydraulic valve.

Another end of a battery heat exchanger is connected with an end of a liquid cooling condenser through a hydraulic valve, another end of the liquid cooling condenser is connected with an end of the radiator, and another end of the radiator is connected with an end of the battery heat exchanger through a hydraulic valve.

An end of the internal condenser is connected with an end of a battery electronic expansion valve, another end of the battery electronic expansion valve is connected with another end of the battery heat exchanger, an end of the battery heat exchanger is connected with an end of a gas-liquid separator, another end of the gas-liquid separator is connected with an end of a compressor, and another end of the compressor is connected with another end of the internal condenser.

When an ambient temperature outside a vehicle is within a first preset temperature range, both a passenger compartment and a battery need to be heated. When the motor pre-heats the battery, the heat pump system absorbs heat from the coolant in circulation through the battery heat exchanger. A temperature of the coolant continuously decreases. The coolant, when flowing through the radiator, absorbs heat in an environment. At the same time, the passenger compartment is heated without affecting a battery system, and COP>1. In this state, an electronic control system determines that a heat conduction connection mode of a multi-circuit heat pump air-conditioning system is the heating mode 12. In the heating mode 12, series connection between the battery heat exchanger and the radiator as well as series connection between the battery system and a motor system are realized through an eight- / four-way valve. When a temperature of the motor system is higher than that of the battery, the motor system is used for pre-heating the battery, which is conducive to improving efficiency. The radiator works, and an HVAC is in an external circulation state.

When the ambient temperature outside a vehicle is within a third preset temperature range, the battery has certain heat storage, and the passenger compartment is pre-heated, the radiator is used to collect heat from environment for pre-heating the passenger compartment. It is more effective to heat the passenger compartment at an intermediate ambient temperature outside a vehicle (-10 °C or higher, where a battery temperature is slightly lower than the ambient temperature outside a vehicle). The radiator works, and HVAC is in an internal circulation state. In this state, the electronic control system determines that the heat conduction connection mode of the multi-circuit heat pump air-conditioning system is the heating mode 13. In the heating mode 13, series connection between the internal evaporator and condenser may support dehumidification of the passenger compartment in a low temperature environment.

Directions in which the coolant flows in the heating modes 12 and 13 are: electric drive module 4 battery pack 4 electric drive module, and liquid cooling condenser 4 radiator 4 battery heat exchanger 4 liquid cooling condenser.

A direction in which the refrigerant flows in the heating modes 12 and 13 is: internal condenser 4 battery heat exchanger 4 gas-liquid separator 4 compressor 4 internal condenser.

Referring to FIG. 1, the multi-circuit heat pump air-conditioning system according to embodiments of the present invention may have all or part of components shown in FIG. 1, and for connection relationships between respective components, the connection manners described in one or more embodiments above may be adopted, so that there are a variety of heating and/or refrigerating modes. For example, the multi-circuit heat pump air-conditioning system has all components and connection relationships shown in FIG. 1. When the multi-circuit heat pump air-conditioning system is running, the electronic control system adopts the heating mode 1 by default, and gradually more mixed modes are carried out in the heating modes 3, 4 and 5. When heat source is insufficient, the heating mode 6 is adopted. If the battery needs to be heated urgently, the heating modes 7, 10 and 11 are adopted. In addition, the multi-circuit heat pump air-conditioning system further provides the heating modes 8, 9, 11, etc. applicable to parking air conditioners.

In the embodiments of the present invention, the heat conduction connection mode of the multi-circuit heat pump air-conditioning system is determined according to the ambient temperature outside a vehicle, the temperature control requirements of the passenger compartment and the battery pack, and the heat storage state of the battery pack. The heat pump system may be started at an extremely low temperature and is transitioned to other heating modes, thereby solving problems of battery life and thermal comfort of the passenger compartment in winter, and facilitating flexible use of heat sources inside and outside the vehicle.

An embodiment of the present invention further provides a vehicle, including a multi-circuit heat pump air-conditioning system supporting start of the vehicle at a low temperature according to any one of the above embodiments.

From the embodiments of the multi-circuit heat pump air-conditioning system supporting start of a vehicle at a low temperature as well as the vehicle provided in the present invention, it may be seen that, in the embodiments of the present invention, the start of the heat pump system at the low temperature is supported and the use of additional components is reduced, without adding additional refrigerant state change device, which may reduce system cost and avoid maintenance of corresponding devices. At the same time, the storage of heat in the passenger compartment to the battery is also supported, and this part of heat is utilized to heat the passenger compartment during next driving (at an interval of about 1-2 hours), so as to improve energy utilization.

It should be noted that the order of the embodiments of the present invention is only for illustration and does not represent the excellence and worseness of the embodiments. Moreover, the specific embodiments of this specification are described above. Other embodiments are within the scope of the appended claims. Respective embodiments in the specification are described in a progressive manner. Identical and similar parts between these embodiments may be referred to each other. Each embodiment focuses on description of differences from other embodiments. The above are only preferred embodiments of the present invention, which are not intended to limit the present invention. Any modification, equivalent replacement, improvement, etc. made within the spirit and principle of the present invention shall be included in the protection scope of the present invention.

## Claims

1. A multi-circuit heat pump air-conditioning system supporting start of a vehicle at a low temperature, comprising: a coolant system, a heat pump system and an electronic control system, wherein
the coolant system comprises a coolant circuit comprising a DC/DC, a motor, a battery pack, a coolant pipeline, and a hydraulic valve and at least one water pump arranged in the coolant pipeline;
the heat pump system comprises a refrigerant circuit comprising a gas-liquid separator, a compressor, a battery heat exchanger, a liquid cooling condenser, a coolant heater, a refrigerant pipeline, and hydraulic valves arranged in the refrigerant pipeline, wherein the coolant heater is configured to heat coolant when an ambient temperature is lower than a preset temperature and the heat pump system is in a non-working state, and the compressor is configured to work to heat refrigerant in the refrigerant pipeline after the heat pump system is started;
the electronic control system comprises a communication unit, a processor and a switching module, wherein the communication unit is configured to receive an ambient temperature outside the vehicle, temperature control requirements of a passenger compartment and the battery pack, and a heat storage state of the battery pack, the processor is configured to generate a working mode switching instruction according to the ambient temperature outside the vehicle, the temperature control requirements of the passenger compartment and the battery pack, and the heat storage state of the battery pack, and the switching module is configured to switch connection states of the coolant circuit and/or the refrigerant circuit in response to the working mode switching instruction;
the communication unit is electrically connected with the processor, the processor is electrically connected with the switching module, and the coolant circuit is thermally connected with the refrigerant circuit.

2. The multi-circuit heat pump air-conditioning system according to claim 1, wherein the heat pump system further comprises an HVAC assembly and a battery electronic expansion valve, wherein the HVAC assembly comprises an internal condenser, an air blower, an air door and an air duct; the electronic control system further comprises an air-conditioning controller;
the HVAC assembly is electrically connected with the air-conditioning controller, and the air-conditioning controller is electrically connected with the processor;
an end of the liquid cooling condenser is connected with an end of the motor through a hydraulic valve, another end of the liquid cooling condenser is connected with an end of the battery heat exchanger through a hydraulic valve, another end of the battery heat exchanger is connected with an end of the battery pack through a hydraulic valve, and another end of the battery pack is connected with another end of the motor through a hydraulic valve;
an end of the internal condenser is connected with an end of the battery electronic expansion valve, another end of the battery electronic expansion valve is connected with the another end of the battery heat exchanger, the end of the battery heat exchanger is connected with an end of the gas-liquid separator, another end of the gas-liquid separator is connected with an end of the compressor, and another end of the compressor is connected with another end of the internal condenser.

3. The multi-circuit heat pump air-conditioning system according to claim 2, wherein the HVAC assembly further comprises an internal radiator;
the another end of the liquid cooling condenser is connected with an end of the internal radiator, and another end of the internal radiator is connected with the another end of the motor.

4. The multi-circuit heat pump air-conditioning system according to claim 3, wherein
the another end of the liquid cooling condenser is connected with an end of the coolant heater, another end of the coolant heater is connected with the end of the internal radiator, and the another end of the internal radiator is connected with the another end of the motor.

5. The multi-circuit heat pump air-conditioning system according to claim 2, 3 or 4, wherein the HVAC assembly further comprises an internal evaporator and an evaporator electronic expansion valve;
the end of the internal condenser is connected with an end of the evaporator electronic expansion valve, another end of the evaporator electronic expansion valve is connected with an end of the internal evaporator, and another end of the internal evaporator is connected with the end of the gas-liquid separator.

6. The multi-circuit heat pump air-conditioning system according to claim 2, wherein the HVAC assembly further comprises an internal evaporator and an evaporator electronic expansion valve;
the another end of the liquid cooling condenser is connected with an end of the coolant heater, and another end of the coolant heater is connected with the end of the battery pack;
the another end of the internal condenser is connected with an end of the evaporator electronic expansion valve, another end of the evaporator electronic expansion valve is connected with an end of the internal evaporator, and another end of the internal evaporator is connected with the end of the gas-liquid separator.

7. The multi-circuit heat pump air-conditioning system according to claim 6, wherein the another end of the gas-liquid separator is connected with the end of the liquid cooling condenser, the another end of the liquid cooling condenser is connected with the end of the battery electronic expansion valve, and the another end of the battery electronic expansion valve is connected with the battery heat exchanger.

8. The multi-circuit heat pump air-conditioning system according to claim 2, wherein the heat pump system further comprises a radiator;
the another end of the liquid cooling condenser is connected with an end of the radiator, and another end of the radiator is connected with the end of the battery heat exchanger through a hydraulic valve;
the end of the liquid cooling condenser is connected with the another end of the gas-liquid separator, the another end of the liquid cooling condenser is connected with the end of the battery electronic expansion valve, and the another end of the battery electronic expansion valve is connected with the battery heat exchanger.

9. The multi-circuit heat pump air-conditioning system according to claim 1, wherein the heat pump system further comprises an HVAC assembly, wherein the HVAC assembly comprises an internal evaporator and an evaporator electronic expansion valve; the electronic control system further comprises an air-conditioning controller;
the HVAC assembly is electrically connected with the air-conditioning controller, and the air-conditioning controller is electrically connected with the processor;
an end of the liquid cooling condenser is connected with an end of the motor through a hydraulic valve, another end of the liquid cooling condenser is connected with an end of the battery heat exchanger through a hydraulic valve, another end of the battery heat exchanger is connected with an end of the battery pack through a hydraulic valve, and another end of the battery pack is connected with another end of the motor through a hydraulic valve;
the another end of the liquid cooling condenser is connected with an end of the evaporator electronic expansion valve, another end of the evaporator electronic expansion valve is connected with an end of the internal evaporator, another end of the internal evaporator is connected with an end of the gas-liquid separator, another end of the gas-liquid separator is connected with an end of the compressor, and another end of the compressor is connected with the end of the liquid cooling condenser.

10. The multi-circuit heat pump air-conditioning system according to claim 9, wherein the heat pump system further comprises a radiator;
the another end of the liquid cooling condenser is connected with an end of the radiator, and another end of the radiator is connected with the end of the battery heat exchanger through a hydraulic valve.

11. The multi-circuit heat pump air-conditioning system according to claim 10, wherein the another end of the liquid cooling condenser is connected with the another end of the battery heat exchanger, and the end of the battery heat exchanger is connected with the end of the gas-liquid separator.

12. The multi-circuit heat pump air-conditioning system according to claim 1, wherein the heat pump system further comprises a battery electronic expansion valve;
an end of the liquid cooling condenser is connected with an end of the motor through a hydraulic valve, another end of the liquid cooling condenser is connected with an end of the battery heat exchanger through a hydraulic valve, another end of the battery heat exchanger is connected with an end of the battery pack through a hydraulic valve, and another end of the battery pack is connected with another end of the motor through a hydraulic valve;
the another end of the liquid cooling condenser is connected with an end of the coolant heater, and another end of the coolant heater is connected with the end of the battery pack;
the another end of the liquid cooling condenser is connected with an end of the battery electronic expansion valve, another end of the battery electronic expansion valve is connected with the another end of the battery heat exchanger, the end of the battery heat exchanger is connected with an end of the gas-liquid separator, another end of the gas-liquid separator is connected with an end of the compressor, and another end of the compressor is connected with the end of the liquid cooling condenser.

13. The multi-circuit heat pump air-conditioning system according to claim 1, wherein the heat pump system further comprises a radiator, an HVAC assembly and a battery electronic expansion valve, wherein the HVAC assembly comprises an internal condenser;
an end of the battery pack is connected with an end of the motor through a hydraulic valve, and another end of the battery pack is connected with another end of the motor through a hydraulic valve;
another end of the battery heat exchanger is connected with an end of the liquid cooling condenser through a hydraulic valve, another end of the liquid cooling condenser is connected with an end of the radiator, and another end of the radiator is connected with an end of the battery heat exchanger through a hydraulic valve;
an end of the internal condenser is connected with an end of the battery electronic expansion valve, another end of the battery electronic expansion valve is connected with the another end of the battery heat exchanger, the end of the battery heat exchanger is connected with an end of the gas-liquid separator, another end of the gas-liquid separator is connected with an end of the compressor, and another end of the compressor is connected with another end of the internal condenser.

14. A vehicle, comprising: a multi-circuit heat pump air-conditioning system supporting start of the vehicle at a low temperature according to any one of claims 1-13.
